# EUROPÄISCHE PATENTSCHRIFT

(11) **EP 2 624 218 B1**
(45) Veröffentlichungstag und Bekanntmachung des Hinweises auf die Patenterteilung: **14.05.2014**
(21) Anmeldenummer: 12153658.5
(22) Anmeldetag: 02.02.2012
(51) Int. Cl.: G07B 15/06, G08G 1/017

(54) **Vorrichtung und Verfahren zur Kontrolle in einem Straßenmautsystem**
Device and method for checking in a toll road system
Dispositif et procédé de contrôle dans un système de péage routier

(43) Veröffentlichungstag der Anmeldung: 07.08.2013
(73) Patentinhaber: Kapsch TrafficCom AG, 1120 Wien (AT)
(72) Erfinder: Leopold, Alexander, 1100 Wien (AT); Nagy, Oliver, 1190 Wien (AT)
(74) Vertreter: Weiser, Andreas

(56) Entgegenhaltungen:
- EP-A2- 1 708 143
- WO-A1-2011/129800
- DE-A1-102005 050 397

## Beschreibung

Die vorliegende Erfindung betrifft Vorrichtungen und Verfahren zur Kontrolle in einem Straßenmautsystem, das auf von Fahrzeugen mitgeführten Onboard-Units basiert.

In modernen Straßenmautsystemen werden mautpflichtige Fahrzeuge mit Onboard-Units (OBUs) ausgestattet, mit deren Hilfe die Fahrzeuge verortet und in der Folge ihre Straßennutzungen vermautet (vergebührt) werden können. Die OBUs können von verschiedenster Art sein: Einerseits können die OBUs von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale des Straßenmautsystems melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs ihre Ortsmeldungen oder Mauttransaktionen einfach speichern oder daraus berechnete Gebühren von einem internen Mautguthaben abbuchen. Anderseits können die OBUs von "fremd-verortetem" Typ sein, beispielsweise mit Hilfe einer Vielzahl geographisch über das Straßenmautsystem verteilter Maut- bzw. Funkbaken, welche jeweils Kurzreichweiten- bzw. DSRC-Funkkommunikationen (dedicated short range communications) mit passierenden OBUs aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs oder den Mautbaken erzeugt und entweder in den OBUs oder in der Zentrale verarbeitet werden.

WO 2011/129800 A1 offenbart ein Fahrzeug- und Verkehrsüberwachungssystem, in dem eine drahtlose Kommunikationsvorrichtung in Kraftfahrzeugen vorgesehen ist. Die Vorrichtung kommuniziert nach Aufforderung Fahrzeugidentifikationsdaten zu einer Datenbank, die aktuelle Fahrzeugversicherungsdaten, Kraftfahrzeugkennzeichen, begangene Verkehrsdelikte etc. bereithält. Wird ein ahndungswürdiges Vergehen festgestellt, wird dies einer Strafverfolgungsbehörde und einem nahe gelegenen Strafverfolgungsfahrzeug mitgeteilt.

Die Erfindung setzt sich zum Ziel, neuartige Kontrollvorrichtungen und -verfahren zur Feststellung und Ahndung (Enforcement) von Verkehrs- oder Mautdelikten in solchen Straßenmautsystemen zu schaffen.

Dieses Ziel wird in einem ersten Aspekt der Erfindung mit einer Kontrollvorrichtung der eingangs genannten Art erreicht, umfassend:
zumindest ein Markierungsfahrzeug, zumindest eine Onboard-Unit und zumindest eine Kontrolleinrichtung mit jeweils einem DSRC-Sendeempfänger zur Errichtung einer DSRC-Funkschnittstelle,
wobei das Markierungsfahrzeug dafür ausgebildet ist, ein Verkehrs- oder Mautdelikt einer Onboard-Unit oder eines diese mitführenden Fahrzeugs zu detektieren und, im Deliktfall, eine Markierungsnachricht an die Onboard-Unit über die DSRC-Funkschnittstelle zu senden,
wobei die Onboard-Unit dafür ausgebildet ist, ihre Position zu bestimmen und ab Empfang einer Markierungsnachricht periodisch Positionsnachrichten mit jeweils ihrer aktuellen Position auszusenden, und
wobei die Kontrolleinrichtung dafür ausgebildet ist, anhand zumindest einer der von der Onboard-Unit ausgesandten Positionsnachrichten das Fahrzeug zu detektieren.

In einem zweiten Aspekt schafft die Erfindung ein Verfahren zur Kontrolle in einem Straßenmautsystem, das auf von Fahrzeugen mitgeführten Onboard-Units basiert, unter Verwendung zumindest eines Markierungsfahrzeugs, zumindest einer Onboard-Unit und zumindest einer Kontrolleinrichtung mit jeweils einem DSRC-Sendeempfänger zur Errichtung einer DSRC-Funkschnittstelle, umfassend:
im Markierungsfahrzeug: Detektieren eines Verkehrs- oder Mautdelikts einer Onboard-Unit oder eines diese mitführenden Fahrzeugs und, im Deliktfall, Senden einer Markierungsnachricht an die Onboard-Unit über die DSRC-Funkschnittstelle;
in der Onboard-Unit: ab Empfang einer Markierungsnachricht, periodisches Bestimmen ihrer eigenen Position und Aussenden von Positionsnachrichten mit jeweils ihrer aktuellen Position;
in der Kontrolleinrichtung: Detektieren des Fahrzeugs anhand zumindest einer der von der Onboard-Unit ausgesandten Positionsnachrichten.

Die Erfindung beruht auf dem neuartigen Ansatz eines verteilten Kontrollsystems, welches sich aus einer ersten Flotte von Markierungsfahrzeugen ("Jägern"), die Deliktfahrzeuge elektronisch "markieren", und einer zweiten Flotte von Kontrolleinrichtungen ("Sammlern") zusammensetzt, welche die derart markierten Deliktfahrzeuge aufgreifen. Die "Jäger" sind gut ausgerüstet zur automatischen Delikterkennung und brauchen für Deliktfahrzeuge keine weiteren Veranlassungen zu treffen als die Markierung derselben; ihre Interaktionen mit den kontrollierten Fahrzeugen sind kurz, sie können sich dadurch schnell bewegen, auch Fahrzeuge mit hoher Geschwindigkeit oder im Gegenverkehr kontrollieren und gering in ihrer Anzahl gehalten werden, was die Gesamtausrüstungskosten in Grenzen hält. Die Onboard-Units brauchen lediglich mit einer geringen Zusatzfunktionalität ausgestattet zu werden, um sich gleichsam selbst als von einem Deliktfahrzeug "markierte" OBU auf drahtlosem Wege erkennen zu geben. Die "Sammler" benötigen vergleichsweise geringe Ausrüstung, da sie keine Delikte feststellen, sondern lediglich Ausstrahlungen von markierten OBUs detektieren und dadurch Deliktfahrzeuge aufspüren. Die Besatzung der Kontrolleinrichtung kann dann z.B. eine Anhaltung des Deliktfahrzeugs und eine manuelle Kontrolle vor Ort durchführen. Aufgrund ihrer geringen Ausrüstungserfordernisse können Kontrolleinrichtungen (Sammler) in großer Zahl vorgesehen werden und dadurch im einzelnen auch zeitaufwendige Vor-Ort-Kontrollen durchführen. Beispielsweise können bestehende Infrastruktureinrichtungen wie Grenz- oder Mautstationen, Flotten von Spezialfahrzeugen wie Einsatzfahrzeuge, öffentliche Verkehrsmittel, Taxis usw. zu Kontrolleinrichtungen umgerüstet werden und ihre Kontrollfunktionen stationär oder mobil im ruhenden oder fließenden Verkehr ausüben, während einige wenige komplexe Aufzeichnungsfahrzeuge (Jäger) sich ständig hochmobil im Fließverkehr bewegen und Delikt-OBUs markieren. Im Ergebnis können automatische Kontrollen von Fahrzeugen mit ihren Onboard-Units selbst in großräumigen, weit verzweigten und mit Hochgeschwindigkeits- und Gegenverkehrsstrecken versehenen Straßennetzen durchgeführt werden.

Die Vorrichtungen und Verfahren der Erfindung sind sowohl für (DSRC-)OBUs vom fremd-verorteten Typ geeignet, die bereits eine DSRC-Funkschnittstelle haben, als auch für (GNSS-)OBUs vom selbst-verortenden Typ, welche zusätzlich eine DSRC-Funkschnittstelle für Kontroll- und Einstellungszwecke haben.

Bevorzugt werden wesentlich mehr Kontrolleinrichtungen vorgesehen als Markierungsfahrzeuge, insbesondere bevorzugt um mindestens eine Zehnerpotenz mehr.

Besonders günstig ist es, wenn die Onboard-Unit nach Empfang einer Markierungsnachricht die Positionsnachrichten nur über eine begrenzte Zeitspanne oder nur für eine begrenzte Anzahl von Positionsnachrichten periodisch aussendet. Dadurch kann vermieden werden, dass Deliktfahrzeuge, die nicht innerhalb einer akzeptablen Zeit aufgegriffen werden, unaufhörlich ihre Positionsnachrichten weitersenden.

Die vom Markierungsfahrzeug detektierten Delikte können alle Arten von Maut- oder Verkehrsdelikten sein, welche automatisch detektierbar sind, beispielsweise Geschwindigkeitsübertretungen detektiert mit Hilfe einer Geschwindigkeitsmesseinrichtung des Markierungsfahrzeugs, Fahrverbote (auch zeitbezogene) detektiert mit Hilfe einer Fahrzeugdetektionseinrichtung des Markierungsfahrzeugs, usw. Bevorzugt sind die Delikte Mautdelikte, und insbesondere bevorzugt solche, die anhand eines aus der Onboard-Unit über die DSRC-Funkschnittstelle auslesbaren Mautparameters festgestellt werden können: Solche Mautparameter können beliebiger Art sein und z.B. über Einsatzzweck des Fahrzeugs (z.B. Einsatzfahrzeug, öffentliches Verkehrsmittel, Privatfahrzeug, Lastkraftwagen usw.), Status des Benutzers des Fahrzeugs, über Größe, Gewicht, Schadstoffklasse, Anzahl der Achsen des Fahrzeugs usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter der OBU zurückgegriffen, um die Höhe der Maut - oder überhaupt die Mautpflicht - zu ermitteln.

Eine bevorzugte Ausführungsform der Erfindung zeichnet sich demgemäß dadurch aus, dass das Detektieren im Markierungsfahrzeug durch Auslesen zumindest eines Mautparameters aus der Onboard-Unit über die DSRC-Funkschnittstelle und Überprüfen des Mautparameters auf Korrektheit erfolgt.

In noch einem weiteren Aspekt befasst sich die Erfindung speziell mit der Kontrolle fahrzeugformspezifischer Mautparameter: Solche fahrzeugformspezifische Parameter, welche die Höhe einer zu entrichtenden Straßenmaut bestimmen, können beispielsweise die Abmessungen des Fahrzeugs, seine aktuelle Achsanzahl (mit oder ohne Anhänger), eine bestimmte Karosserieform wie LKW oder PKW usw. sein und als Mautparameter in einer Onboard-Unit eingestellt oder gespeichert sein. Um missbräuchliche Fehleinstellungen solcher Mautparameter zu detektieren, weist das Markierungsfahrzeug einen Sensor, bevorzugt einen Laserentfernungsmesser oder Laserscanner, zum Erfassen eines Formparameters eines die Onboard-Unit mitführenden Fahrzeugs auf und stellt die Korrektheit des Mautparameters abhängig vom Formparameter fest.

In jenen Ausführungsformen der Erfindung, in denen die Deliktdetektion in den Markierungsfahrzeugen auf Überprüfungen von in den Onboard-Units eingestellten Mautparametern basiert, kann gemäß einem weiteren bevorzugten Merkmal der Erfindung anlässlich des Detektierens eines Deliktfahrzeugs mit der Kontrolleinrichtung, wenn die in einer von der Kontrolleinrichtung empfangenen Positionsnachricht angegebene Position innerhalb der Reichweite der DSRC-Funkschnittstelle der Kontrolleinrichtung ist, der Mautparameter auch von der Kontrolleinrichtung aus der Onboard-Unit über die DSRC-Funkschnittstelle ausgelesen und in der Kontrolleinrichtung angezeigt werden, um dort eine nochmalige Überprüfung bzw. Validierung des Mautparameters und des Mautdelikts zu ermöglichen.

Deliktmarkierte Onboard-Units können ihre Positionsnachrichten auf verschiedenste Arten aussenden. Gemäß einer ersten Ausführungsform senden die Onboard-Units die Positionsnachrichten über ihren DSRC-Sendeempfänger aus, sodass sie z.B. von DSRC-Funkbaken auf ihrem Weg oder bevorzugt direkt von den Kontrolleinrichtungen über deren DSRC-Sendeempfänger empfangen werden können. Aufgrund der begrenzten Reichweite der DSRC-Funkschnittstelle können die Kontrolleinrichtungen passierende Deliktfahrzeuge bereits einzig aufgrund der Tatsache des erfolgreichen Empfangs der Positionsnachrichten über die DSRC-Funkschnittstelle detektieren und damit aufspüren bzw. lokalisieren.

In einer alternativen Ausführungsform senden die Onboard-Units ihre Positionsnachrichten über ein Mobilfunknetz (public land mobile network, PLMN), z.B. ein GSM-, UMTS- oder LTE-Netz, an eine Zentrale, welche die Positionsnachrichten an die Kontrolleinrichtungen weiterleitet. Diese können dann anhand der in den Positionsnachrichten jeweils angegebenen Positionen die Deliktfahrzeuge lokalisieren und detektieren.

In beiden Ausführungsformen kann vom Markierungsfahrzeug beim Senden einer Markierungsnachricht auch zusätzlich eine Deliktnachricht über ein Mobilfunknetz an die Zentrale zur weiteren Überprüfung und/oder Archivierung gesendet werden. Bevorzugt können die Deliktnachrichten von der Zentrale auch an die Kontrolleinrichtungen weitergeleitet und in den Kontrolleinrichtungen dazu verwendet werden, ausgelesene Mautparameter damit gegenzuprüfen.

In der Zentrale empfangene Deliktnachrichten können in weiterer Ausgestaltung der Erfindung auch dazu verwendet werden, zu jeder empfangenen Deliktnachricht eine Bestätigungsnachricht über das Mobilfunknetz an die in der Deliktnachricht genannte Onboard-Unit zurückzusenden. Die Onboard-Unit kann dann dazu ausgebildet werden, vor dem periodischen Aussenden der Positionsnachrichten auf eine solche Bestätigungsnachricht zu warten. Damit können die Systemsicherheit erhöht und z.B. zusätzliche Berechtigungsüberprüfungen in der Zentrale vorgenommen werden.

Wenn innerhalb einer vorgegebenen Wartezeit in der Onboard-Unit keine Bestätigungsnachricht zu einer Markierungsnachricht einlangt, wird bevorzugt vorgesehen, dass die Onboard-Unit die empfangene Markierungsnachricht ignoriert, so dass das Aussenden der Positionsnachrichten dann unterbleibt.

In jedem Fall ist es besonders günstig, wenn das Aussenden der Positionsnachrichten in der Onboard-Unit von der Zentrale aus über das Mobilfunknetz jederzeit abschaltbar ist, um in Störfällen zentral eingreifen zu können.

In einer weiteren bevorzugten Ausgestaltung der Erfindung, in der die Kontrolleinrichtung ein Kontrollfahrzeug ist, kann dieses mit einer Einrichtung zur Bestimmung seiner eigenen Position, bevorzugt einem Satellitennavigationsempfänger, ausgestattet sein und seine Position in der Zentrale registrieren, um von der Zentrale nur Deliktnachrichten betreffend seine Umgebung zu erhalten. Dadurch kann eine zusätzliche Sicherheitsstufe für das System errichtet werden, indem für deliktmarkierte OBUs auch eine entsprechende Deliktnachricht in der Zentrale vorliegen muss, welche von den Kontrolleinrichtungen gegengeprüft wird, bevor ein Delikt für das Fahrzeug einer aufgegriffenen Delikt-OBU geahndet wird.

Noch eine weitere Sicherheits-Überprüfungsstufe kann errichtet werden, indem das Markierungsfahrzeug eine Leseeinrichtung für ein Kennzeichen eines die Onboard-Unit mitführenden Fahrzeugs aufweist und das Kennzeichen in die Deliktnachricht aufnimmt, und die Kontrolleinrichtung ebenfalls eine Leseeinrichtung für das Fahrzeugkennzeichen aufweist und dieses zum Auswählen der Deliktnachricht für die Gegenprüfung verwendet.

Gemäß einem weiteren bevorzugten Merkmal der Erfindung kann das Markierungsfahrzeug auch mit einer Einrichtung zur Messung von Geschwindigkeit und Fahrtrichtung eines passierenden Fahrzeugs ausgestattet sein und diese Messwerte in die Markierungsnachricht und/oder die Deliktnachricht aufnehmen, um die Validierung des Delikts zu erleichtern.

Weitere Merkmale und Vorteile der Erfindung ergeben sich aus der nachfolgenden Beschreibung von bevorzugten Ausführungsbeispielen, welche auf die begleitenden Zeichnungen Bezug nehmen, in denen zeigen:
Fig. 1 die Funktionsweise der Kontrollvorrichtungen und des Kontrollverfahrens der Erfindung in einer Fahrzeugpopulation eines Straßennetzes schematisch im Überblick;
die Fig. 2a und 2b verschiedene Vorrichtungskomponenten und Verfahrensschritte bei der Passage eines zu kontrollierenden Fahrzeugs an einem Markierungsfahrzeug;
die Fig. 3a und 3b verschiedene Vorrichtungskomponenten und Verfahrensschritte bei der Passage eines zu kontrollierenden Fahrzeugs an einer Kontrolleinrichtung;
die Fig. 4a und 4b Flussdiagramme zweier verschiedener Ausführungsformen des im Markierungsfahrzeug ablaufenden Verfahrensteils;
Fig. 5 ein Blockschaltbild einer Onboard-Unit gemäß der Erfindung;
Fig. 6 ein Flussdiagramm des in der Onboard-Unit ablaufenden Verfahrensteils;
Fig. 7a ein Flussdiagramm einer ersten Ausführungsform des in der Zentrale und in der Kontrolleinrichtung ablaufenden Verfahrensteils; und
Fig. 7b ein Flussdiagramm einer alternativen Ausführungsform des in der Kontrolleinrichtung ablaufenden Verfahrensteile.

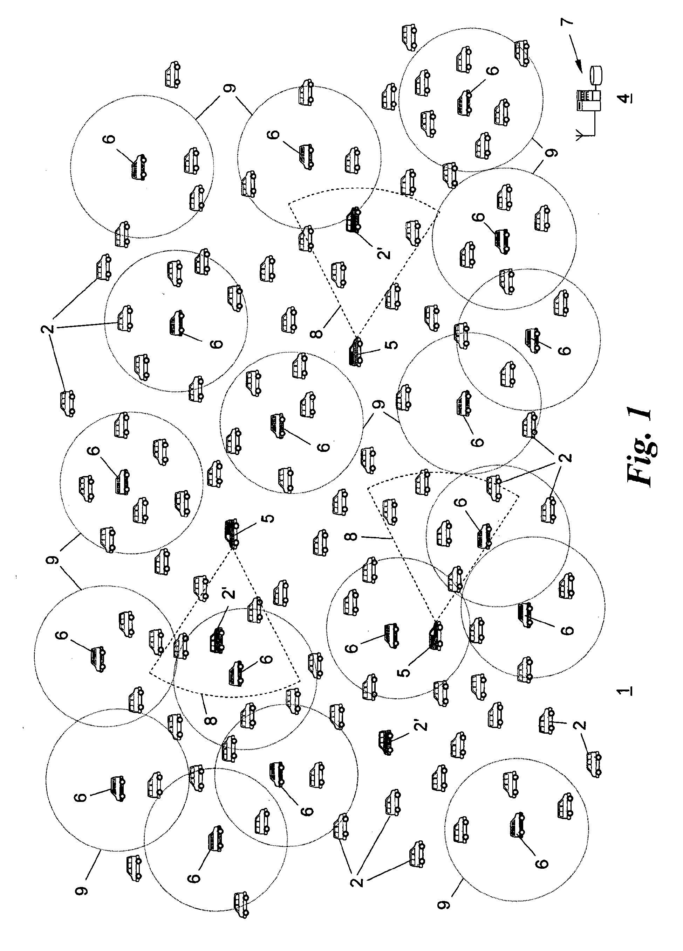

Fig. 1 zeigt schematisch ein Straßenmautsystem 1, in dessen Rahmen sich eine Vielzahl mautpflichtiger Fahrzeuge 2 auf einem nicht näher dargestellten, z.B. landesweiten Straßennetz bewegen. Das Straßenmautsystem 1 dient dazu, beliebige Straßennutzungen der Fahrzeuge 2 zu vermauten (vergebühren), und zwar sowohl Nutzungen von Verkehrsflächen des fließenden Verkehrs in Form von z.B. Wege-, Gebiets-, Übertritts- oder Grenzmaut als auch von Verkehrsflächen des ruhenden Verkehrs in Form von z.B. Aufenthalts- oder Parkgebühren.

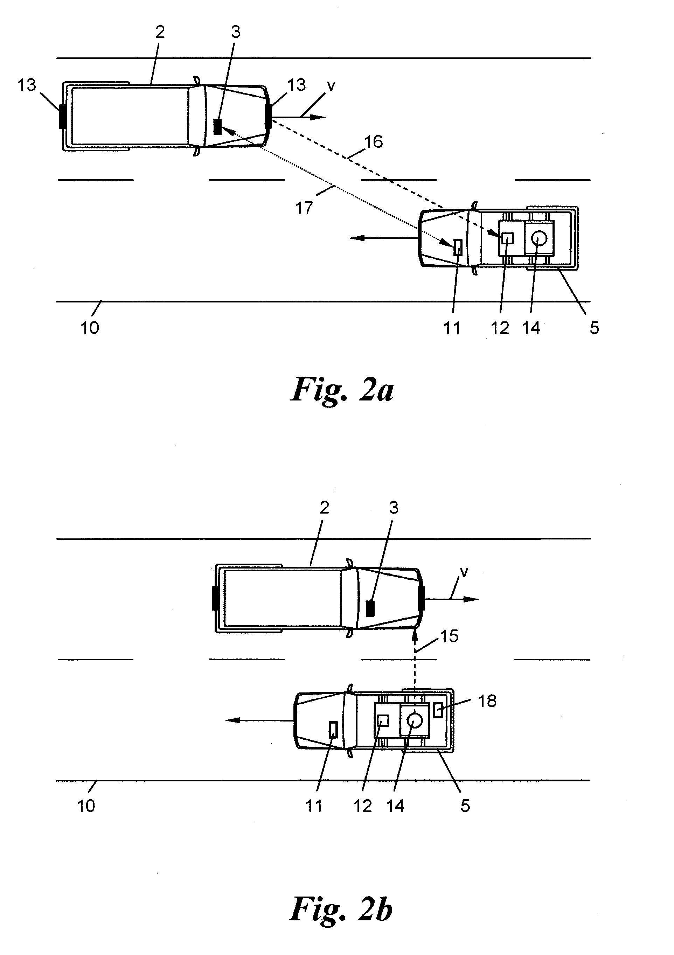

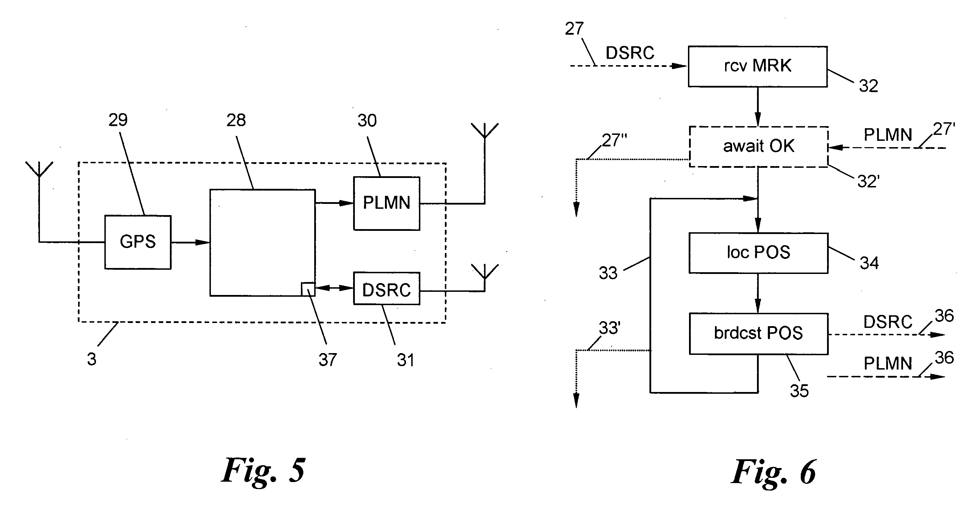

Zu diesem Zweck sind gemäß den Fig. 2, 3 und 5 alle mautpflichtigen Fahrzeuge 2 mit Onboard-Units (OBUs) 3 ausgestattet, mit deren Hilfe die Fahrzeuge 2 verortet und in der Folge vermautet werden können. Die OBUs 3 können von verschiedenster Art sein: Einerseits können die OBUs 3 von "selbst-verortendem" Typ sein, d.h. ihren Ort fortlaufend selbst bestimmen, z.B. mittels eines Satellitennavigationsempfängers 29 (Fig. 5) im Rahmen eines Satellitennavigationssystems (global navigation satellite system, GNSS), und die so ermittelten Orte ("position fixes") entweder direkt einer Zentrale 4 des Straßenmautsystems 1 melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs 3 ihre Ortsmeldungen oder Mauttransaktionen einfach speichern oder daraus berechnete Gebühren von einem internen Mautguthaben abbuchen. Anderseits können die OBUs 3 von "fremd-verortetem" Typ sein, beispielsweise mit Hilfe einer Vielzahl geographisch über das Straßenmautsystem 1 verteilter Maut- bzw. Funkbaken, welche jeweils Kurzreichweiten- bzw. DSRC-Funkkommunikationen (dedicated short range communications) mit passierenden OBUs 3 aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs 3 oder den Mautbaken erzeugt und entweder in den OBUs 3 oder in der Zentrale 4 verarbeitet werden.

Zur korrekten Mautberechnung im Straßenmautsystem 1 werden in den OBUs 3 jeweils ein oder mehrere für das jeweilige Fahrzeug 2 spezifische Mautparameter OC eingestellt oder gespeichert. Die Mautparameter OC können beliebiger Art sein und z.B. über Einsatzzweck des Fahrzeugs 2 (z.B. Einsatzfahrzeug, öffentliches Verkehrsmittel, Privatfahrzeug, Lastkraftwagen usw.), Status des Benutzers des Fahrzeugs 2, über Größe, Gewicht, Schadstoffklasse, Anzahl der Achsen des Fahrzeugs 2 mit oder ohne Anhänger usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter OC der OBU 3 zurückgegriffen, um die Höhe der Maut - oder überhaupt die Mautpflicht - zu ermitteln.

Im weiteren Beispiel werden hier insbesondere solche Mautparameter OC betrachtet, die durch eine Überprüfung des äußeren Erscheinungsbilds, d.h. der Form des Fahrzeugs 2, welches die OBU 3 mitführt, validiert (gegengeprüft) werden können. Solche Mautparameter OC werden hier als fahrzeugformspezifisch bezeichnet. Fahrzeugformspezifische Mautparameter OC können z.B. eine oder mehrere Abmessungen des Fahrzeugs 2, seine Karosserieform (Kastenaufbau, Pritschenaufbau, PKW- oder LKW-Aufbau), Anzahl der Achsen, Anzahl der Anhänger usw. sein.

Die im weiteren beschriebenen Kontrollvorrichtungen und -verfahren sind insbesondere für solche OBUs 3 geeignet, deren darin eingestellte bzw. gespeicherte fahrzeugformspezifische Mautparameter OC über eine DSRC-Funkschnittstelle 31 (Fig. 5) auslesbar sind, wie es beispielsweise bei DSRC-OBUs nach den Standards RFID, CEN-DSRC, UNI-DSRC, ITS-G5 oder WAVE (wireless access in a vehicle environment) der Fall ist. Auch GNSS-OBUs 3, welche zusätzlich eine DSRC-Funkschnittstelle 31 zur Kontrollauslesung ihrer Mautparameter haben, sind geeignet und können in der folgenden Weise kontrolliert werden.

Darüber hinaus sind die hier beschriebenen Kontrollvorrichtungen und -verfahren natürlich auch in der Lage, festzustellen, ob ein mautpflichtiges Fahrzeug 2 überhaupt mit einer OBU 3 ausgestattet ist und - da das Auslesen der Mautparameter eine korrekt funktionierende OBU 3 voraussetzt - dabei auch die Funktionsfähigkeit einer OBU 3 mitzuprüfen.

Schließlich sind die beschriebenen Kontrollvorrichtungen- und Verfahren auch befähigt, allgemeine Verkehrsdelikte der Fahrzeuge 2 zu detektieren und zu ahnden, wie Geschwindigkeitsübertretungen, Übertretungen von (Nacht-)Fahrverboten und sonstige Verkehrsvergehen, soweit sie automatisch mit Hilfe von Messeinrichtungen, Sensoren usw. detektiert werden können.

Zu den genannten Kontrollzwecken wird im Straßenmautsystem 1 eine Kontrollvorrichtung eingesetzt, die sich aus einer ersten Flotte von Markierungsfahrzeugen 5, den genannten OBUs 3, einer zweiten Flotte von Kontrolleinrichtungen (hier: Kontrollfahrzeugen 6) und optional einem Deliktserver 7 in der Zentrale 4 zusammensetzt. Anstelle oder zusätzlich zu mobilen Kontrollfahrzeugen 6 können auch stationäre Kontrolleinrichtungen, z.B. Maut- oder Grenzstationen, vorgesehen werden. Das im Folgenden für Kontrollfahrzeuge 6 Gesagte trifft auf alle Arten von Kontrolleinrichtungen zu.

Bevorzugt werden wesentlich mehr Kontrollfahrzeuge 6 vorgesehen als Markierungsfahrzeuge 5. Das Verhältnis der Anzahl von Kontrollfahrzeugen 6 zu Markierungsfahrzeugen 5 beträgt bevorzugt mindestens 10:1, bevorzugt 100:1, 1000:1 und mehr. Wie nachfolgend erläutert sind Kontrollfahrzeuge 6 einfacher aufgebaut als Markierungsfahrzeuge 5 und werden mit einem anderen Bewegungsverhalten betrieben, was ein ausgewogenes Abdeckungsverhältnis der Wirkungsbereiche von Markierungs- und Kontrollfahrzeugen bei minimalen Kosten ergibt: Die Markierungsfahrzeuge 5 bewegen sich ständig im fließenden Verkehr und ihre Interaktionen mit den zu kontrollierenden Fahrzeugen 2 sind kurz, wogegen die Kontrollfahrzeuge 6 sowohl beweglich als auch stationär eingesetzt werden können und, wenn sie Anhaltekontrollen bzw. Ahndungen von Mautdelikten durchführen, längere Interaktionen mit den kontrollierten Fahrzeugen 2 eingehen.

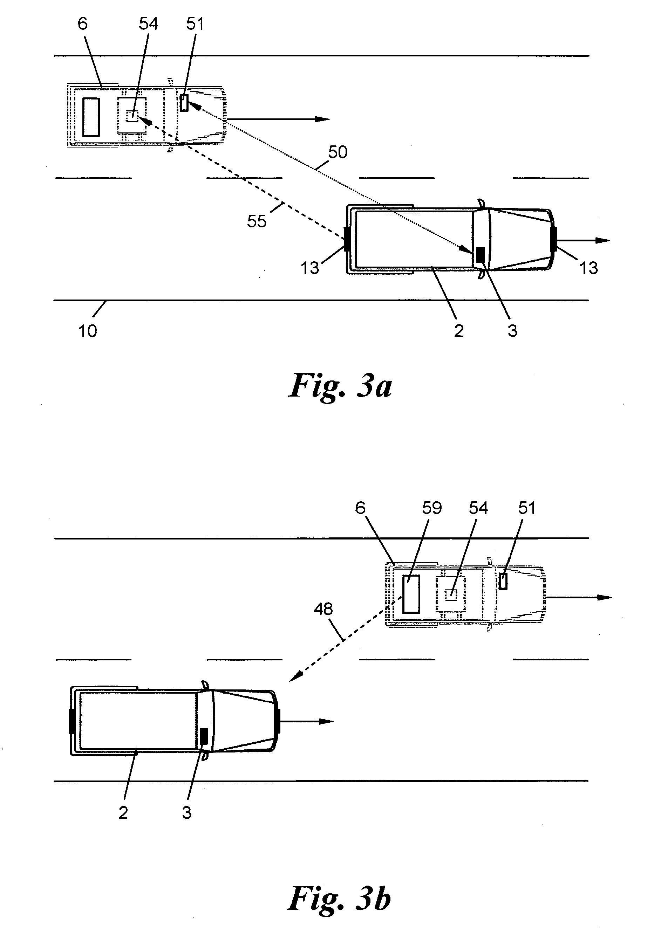

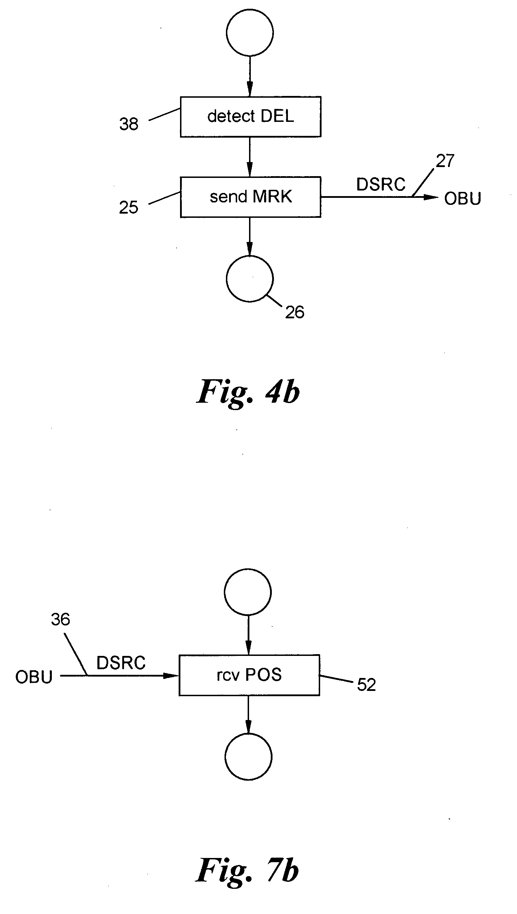

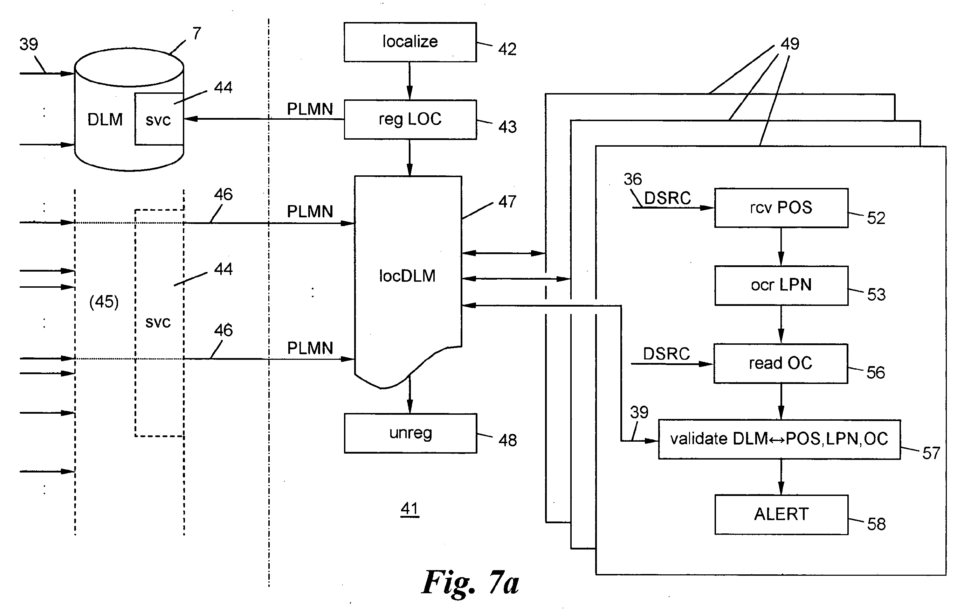

Wie Fig. 1 im Überblick zeigt, dienen die Markierungsfahrzeuge 5 dazu, in ihren jeweiligen begrenzten Erfassungsbereichen 8 Fahrzeuge 2, die ein Verkehrs- oder Mautdelikt begehen, z.B. eine Geschwindigkeitsübertretung, oder die keine, eine mangelhaft funktionierende oder falsch eingestellte OBU 3 haben, im weiteren als Deliktfahrzeuge 2' bezeichnet, zu detektieren und deren OBUs 3 über die DSRC-Funkschnittstelle elektronisch zu "markieren", wie später anhand der Fig. 2, 4 und 5 noch ausführlicher erläutert. Die Kontrollfahrzeuge 6 dienen dazu, in ihrer jeweiligen Umgebung 9 befindliche Deliktfahrzeuge 2' anhand der von deren OBUs 3 ausgesandten Positionsnachrichten zu detektieren, wie später anhand der Fig. 3 und 7 näher erläutert.

Die Besatzung des Kontrollfahrzeuges 6 kann dann die entsprechenden weiteren Überprüfungs- und Ahnungsmaßnahmen treffen, z.B. das Deliktfahrzeug 2' anhalten, eine Verkehrskontrolle durchführen, eine Maut nachverrechnen, eine Geldstrafe verhängen usw.

Zusätzlich zu den DSRC-Funkschnittstellen zwischen Markierungsfahrzeugen 5 und OBUs 3 sowie zwischen OBUs 3 und Kontrollfahrzeugen 6 können die Markierungsfahrzeuge 5 und/oder OBUs 3 und/oder Kontrollfahrzeuge 6 untereinander und/oder mit der Zentrale 4 über ein Drahtlosnetzwerk in Verbindung stehen, z.B. ein Mobilfunknetz, insbesondere ein GSM-, UMTS- oder LTE-Netz, bevorzugt über paketvermittelte Verbindungen. Alternativ ist es auch denkbar, ein Netz geographisch verteilter Funkbaken im Straßenmautsystem 1 zu verwenden, beispielsweise DSRC-Funkbake, über welche die Markierungsfahrzeuge 5, OBUs 3 und Kontrollfahrzeuge 6 kommunizieren.

Die Fig. 2a und 2b zeigen eines der Markierungsfahrzeuge 5 im Detail zu zwei aufeinanderfolgenden Zeitpunkten bei der Passage eines Fahrzeugs 2 auf einer Fahrbahn 10 im Gegenverkehr. Das Markierungsfahrzeug 5 verfügt über einen DSRC-Sendeempfänger 11 zur DSRC-Funkkommunikation mit der OBU 3 des Fahrzeugs 2, eine Kennzeichenleseeinrichtung 12 zum automatischen Lesen (optical character recognition, OCR) einer Kennzeichentafel 13 des Fahrzeugs 2, sowie einen Sensor 14, hier einen Laserscanner, zum Erfassen eines Parameters der Außenform des Fahrzeugs 2, im weiteren Formparameter CL genannt.

Der Formparameter CL ist in dem vorliegenden Beispiel eine Fahrzeugklasse ("PKW", "LKW mit zwei Achsen", "LKW mit drei Achsen", "LKW mit vier Achsen", "LKW mit Anhänger" usw); es versteht sich jedoch, dass auch jede andere Eigenschaft der Au-βenform des Fahrzeugs 2, die mit dem Sensor 14 ermittelt werden kann, als Formparameter CL dienen kann, analog dem erörterten fahrzeugformspezifischen Mautparameter OC.

Der Sensor 14 zur Erfassung des Formparameters CL kann auf jede in der Technik bekannte Art aufgebaut werden, beispielsweise in Form einer elektronischen Kamera, die eines oder mehrere Bilder des passierenden Fahrzeugs 2, auch unter unterschiedlichen Blickwinkeln, aufnehmen kann, aus welchen Bildern dann durch Bilderkennungssoftware entsprechende Eigenschaften und Formparameter des Fahrzeugs 2 extrahiert werden können. Alternativ kann der Sensor 14 ein Lichtschnitt-Sensor oder ein Radar- oder Laserentfernungsmesser oder -scanner sein, welcher das Fahrzeug 2 bei der Passage mit einem Licht-, Radar- oder Laserstrahl oder -fächer 15 abtastet, um eine oder mehrere Abmessungen oder Konturen des passierenden Fahrzeugs 2 in Form eines Abtastprofils oder einer Abtastpunktewolke zu erfassen.

Die Kennzeichenleseeinrichtung 12 des Markierungsfahrzeugs 5 führt ein in der Technik bekanntes OCR-Lesen eines behördlichen Kennzeichens LPN auf der Kennzeichentafel 13 des Fahrzeugs 2 durch ("automatic license plate number recognition", ALNR); ihr Abbildungspfad bzw. Informationsfluss ist schematisch mit dem Pfeil 16 dargestellt.

Der DSRC-Sendeempfänger 11 des Markierungsfahrzeugs 5 baut eine DSRC-Funkkommunikation 17 mit der OBU 3 auf, um den in der OBU 3 eingestellten oder gespeicherten Mautparameter OC für die weitere Überprüfung auszulesen. Bei dieser Überprüfung soll der ausgelesene Mautparameter OC der OBU 3 mit dem vom Sensor 14 erfassten Formparameter CL des Fahrzeugs 2 konsistent sein: Wenn der Mautparameter OC beispielsweise "dreiachsiger LKW" angibt, sollte der Sensor 14 auch einen damit konsistenten Formparameter CL detektieren, wenn nicht, liegt ein Mautdelikt vor und das Fahrzeug 2 ist ein Deliktfahrzeug 2'.

Es versteht sich, dass ein aus der OBU 3 ausgelesener Mautparameter OC zusätzlich auch noch von anderen Komponenten abhängen kann als der Fahrzeugform, z.B. dem Status oder Einsatzzweck des Fahrzeugs 2, der Uhrzeit, zeitlichen Rahmenbedingungen (z.B. Nachtfahrverbot), Fahrzeug-Emissionsklassen-Beschränkungen, Geschwindigkeiten usw., was bei der Deliktprüfung ebenfalls berücksichtigt werden kann.

Darüber hinaus kann das Markierungsfahrzeug 5 auch andere Delikte als Mautdelikte feststellen, z.B. allgemeine Verkehrsdelikte eines Fahrzeugs 2, beispielsweise Geschwindigkeitsübertretungen. Dazu kann das Markierungsfahrzeug 5 mit einer Einrichtung 18 zur Messung von Geschwindigkeit und Fahrtrichtung, d.h. des Bewegungsvektors v, eines Fahrzeugs 2 ausgestattet werden. Die Messeinrichtung 18 kann auch durch eine als Videokamera ausgebildete Kennzeichenleseeinrichtung 12, in deren Bildern Bewegungen detektiert werden können, oder einen als Doppler-Radar ausgeführten DSRC-Sendeempfänger 11 oder durch entsprechende Messungen mit Hilfe des Sensors 14, z.B. Laser- oder Lidar-Messungen am Abtaststrahl bzw. -fächer 15, realisiert werden.

Alle Komponenten DSRC-Sendeempfänger 11, Kennzeichenleseeinrichtung 12, Sensor 14 und Messeinrichtung 18 des Markierungsfahrzeugs 5 stehen untereinander - gegebenenfalls über eine (nicht dargestellte) Steuereinrichtung - in Verbindung, und das Aufzeichnungsfahrzeug 2 kann wie geschildert mit der Zentrale 4 bzw. dem Deliktserver 7 über eine (nicht dargestellte) Kommunikationseinrichtung drahtlos kommunizieren.

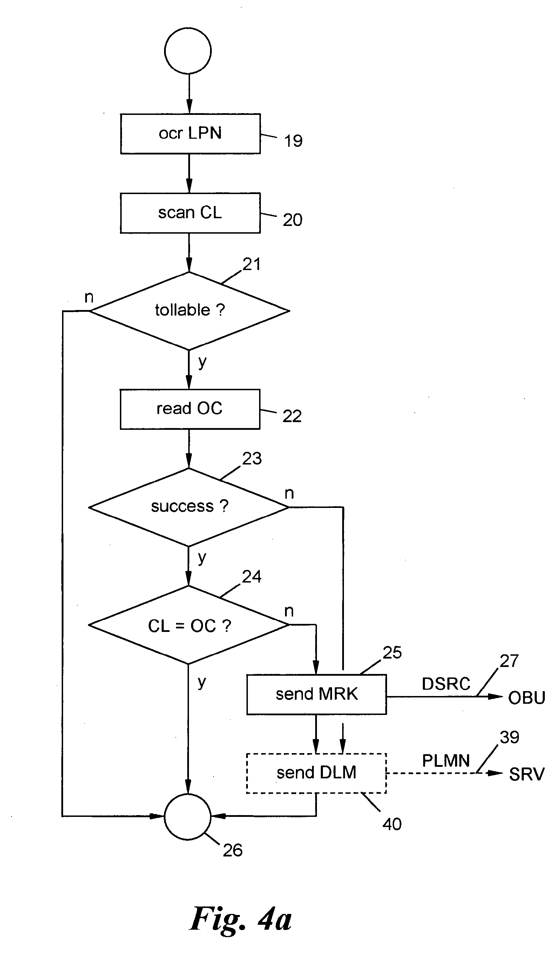

Unter Bezugnahme auf die Fig. 2 und 4a werden nun die Funktionsweise des Markierungsfahrzeugs 5 und das bei der Passage eines Fahrzeugs 2 ablaufende Markierungsverfahren für ein fahrzeugformspezifisches Mautdelikt näher erläutert. Bei Annäherung des Fahrzeugs 2 an das Markierungsfahrzeug 5 wird in einem ersten Schritt 19 das Kennzeichen LPN des Fahrzeugs 2 mit Hilfe der Kennzeichenleseeinrichtung 12 von der Kennzeichentafel 13 gelesen (Pfeil 16). Der Schritt 19 kann auch zu jedem späteren Zeitpunkt des Verfahrens von Fig. 4 ausgeführt werden, solange das Kennzeichenleseergebnis LPN noch nicht benötigt wird, so beispielsweise auch später durch Lesen der rückwärtigen Kennzeichentafel 13 des Fahrzeugs 2.

Anschließend wird in einem Schritt 20 mit Hilfe des Sensors 14 der Formparameter CL des Fahrzeugs 2 erfasst, im gezeigten Beispiel durch Laserscannen und Detektieren der Achsanzahl des Fahrzeugs 2, woraus eine achsbezogene Fahrzeugklasse ("class") als Formparameter CL ermittelt wird.

In einem anschließenden Entscheidungsschritt 21 wird aufgrund des Formparameters CL überprüft, ob das Fahrzeug 2 überhaupt mautpflichtig ist oder nicht. Beispielsweise könnten zweiachsige Fahrzeuge 2 als nicht-mautpflichtig und Fahrzeuge 2 mit mehr als zwei Achsen als mautpflichtig definiert sein. Wenn der Formparameter CL Mautpflicht anzeigt (Zweig "y"), wird im anschließenden Schritt 22 die OBU 3 mit Hilfe des DSRC-Sendeempfängers 11 kontaktiert (Pfeil 17). Dabei wird der Mautparameter OC aus der OBU 3 ausgelesen und eine erfolgreiche Auslesung zeigt gleichzeitig an, dass die OBU 3 vorhanden ist und funktioniert. Im darauffolgenden Entscheidungsschritt 23 wird bei einem Fehlschlagen des Auslesens (Zweig "n") direkt zum Schritt 40 der Erzeugung einer Deliktnachricht DLM 39 übergegangen.

Andernfalls (Zweig "y" von Schritt 23) wird in der weiteren Entscheidung 24 überprüft, ob der erfasste Formparameter CL und der ausgelesene Mautparameter OC zueinander passen bzw. konsistent sind, d.h. der Mautparameter OC der OBU 3 so eingestellt ist, dass er dem aufgrund der Außenform des Fahrzeugs 2 erfassten Formparameter CL entspricht. Wenn ja (Zweig "y"), ist alles in Ordnung und das Verfahren endet bei 26. Wenn nein (Zweig "n"), liegt eine Inkonsistenz vor, welche ein mögliches Mautdelikt darstellt, und es wird zu Schritt 25 des Markierens der OBU 3 als "Delikt-OBU" eines "Deliktfahrzeugs" 2' übergegangen.

Es versteht sich, dass die Schritte 19 bis 24 - soweit sie nicht einander voraussetzen - auch in anderer Reihenfolge vorgenommen werden können.

Im Markierungsschritt 25 wird eine Markierungsnachricht ("marker", MRK) 27 vom Markierungsfahrzeug 5 über die DSRC-Funkschnittstelle 17 zwischen den DSRC-Sendeempfängern 11 und 31 an die OBU 3 des Fahrzeugs 2 gesandt. Die Verarbeitung der Markierungsnachricht 27 in der OBU 3 wird anhand der Fig. 5 und 6 näher erläutert.

Gemäß Fig. 5 weist die OBU 3 einen Prozessor 28, die Satellitennavigationseinrichtung 29, z.B. einen GPS-Empfänger, ein Kommunikationsmodul 30 für ein Mobilfunknetz und den DSRC-Sendeempfänger 31 auf. Bei fremd-verorteten DSRC-OBUs 3 kann der Satellitennavigationsempfänger 29 entfallen. Auch das Mobilfunknetz-Kommunikationsmodul 30 ist optional.

Gemäß Fig. 6 wird die Markierungsnachricht 27 in der OBU 3 in einem ersten Schritt 32 empfangen. Ab Empfang der Markierungsnachricht 27 startet die OBU 3 mit einem Schleifenprozess 33, im Rahmen dessen sie fortlaufend - z.B. in regelmäßigen oder unregelmäßigen zeitlichen Abständen - ihre eigene Position POS in einem Schritt 34 bestimmt und in einem Schritt 35 als Positionsnachricht 36 aussendet ("broadcast"), und zwar bevorzugt über den DSRC-Sendeempfänger 31. Alternativ oder zusätzlich könnte die Positionsnachricht 36 auch mit Hilfe des Mobilfunknetz-Kommunikationsmoduls 30 über ein Mobilfunknetz abgesetzt werden, und zwar an den Deliktserver 7 der Zentrale 4 oder gegebenenfalls auch an Kontrollfahrzeuge 6.

Die Markierungsnachricht 27 setzt damit gleichsam ein "Flag" 37 in der OBU 3, welches diese als "Delikt-OBU" markiert und dazu veranlasst, fortlaufend Positionsnachrichten 36 mit ihrer eigenen Position POS auszustrahlen.

Der Schleifenprozess 33 wird bevorzugt nur über eine begrenzte Zeitspanne, z.B. einige zig Minuten oder einige Stunden, oder nur über eine begrenzte Anzahl von Durchgängen durchlaufen, so dass Positionsnachrichten 36 nur über diese Zeitspanne oder in dieser Anzahl ausgesandt werden.

Fig. 4b zeigt eine vereinfachte Variante des Verfahrens im Markierungsfahrzeug 5, beispielsweise zur Detektion allgemeiner Verkehrsdelikte. In einem allgemeinen ersten Schritt 38 wird ein Delikt des Fahrzeugs 2 detektiert, beispielsweise ein Mautvergehen wie in Fig. 4a erläutert oder eine Geschwindigkeitsübertretung z.B. mit Hilfe der Messeinrichtung 18 des Markierungsfahrzeugs 5. Im anschließenden Schritt 25 wird die Markierungsnachricht 27 über die DSRC-Funkschnittstelle 17 an die OBU 3 gesandt, und diese startet die Broadcast-Schleife 33 (Fig. 6) .

Zurückkommend auf Fig. 4a kann das Markierungsfahrzeug 5 optional zusätzlich zur Markierungsnachricht 27 auch eine Deliktnachricht ("delict message", DLM) 39 in einem Schritt 40 an die Zentrale 4, genauer den Deliktserver 7, senden, bevorzugt über ein Mobilfunknetz. Die Deliktnachricht 39 enthält Daten über das Delikt, z.B. Geschwindigkeit des Fahrzeugs, den erfassten Formparameter CL, den ausgelesenen Mautparameter OC und/oder das Kennzeichenleseergebnis LPN, sowie optional weitere Daten wie den aktuellen Ort ("Deliktort") DO und die aktuelle Zeit ("Deliktzeit") DT des Markierungsvorgangs, aus der OBU 3 ausgelesene weitere Stammdaten wie OBU-Kennung OID, Benutzer-Stammdaten, Fahrzeug-Stammdaten usw.

Der Deliktort DO kann dabei auch verschiedenste Arten ermittelt werden: Das Markierungsfahrzeug 5 kann über eine eigene Positionsbestimmungseinrichtung verfügen, z.B. einen Satellitennavigationsempfänger, und den aktuellen Ort der Passage als Deliktort DO aufzeichnen. Alternativ kann die OBU 3, insbesondere wenn sie von selbst-verortendem Typ ist, ihre von der Satellitennavigationseinrichtung 29 ermittelte aktuelle Position POS als Deliktort DO dem Aufzeichnungsfahrzeug 5 zur Verfügung stellen. Auch die bekannten Orte benachbarter Funkbaken eines bakenbasierten Straßenmautsystems 1 können näherungsweise herangezogen werden.

Die Deliktnachricht 39 wird anschließend vom Deliktserver 7 den Kontrollfahrzeugen 6 für weitere Prüfungszwecke zur Verfügung gestellt, wie auch später noch näher erläutert. Die Zentrale 4 bzw. ihr Deliktserver 7 können beispielsweise zu jeder empfangenen Deliktnachricht 39 eine Bestätigungsnachricht 27' (Fig. 6) über das Mobilfunknetz an die in der Deliktnachricht 39 genannte - z.B. über ihre OBU-Kennung OID referenzierte - OBU 3 zurücksenden. Die OBI 3 kann dann in einem dem Schleifenprozess 33 vorgeordneten Warteschritt 32' auf das Einlangen einer solchen Bestätigungsnachricht 27' warten.

Zusätzlich kann, wenn innerhalb einer vorgegebenen Wartezeit im Warteschritt 32' keine solche Bestätigungsnachricht 27' von der Zentrale 4 einlangt, die zuvor im Schritt 32 empfangene Markierungsnachricht 27 ignoriert werden, d.h. das Aussenden der Positionsnachrichten 36 entfällt (Pfeil 27").

Auch kann eine Möglichkeit vorgesehen werden, um das Aussenden der Positionsnachrichten 36 einer OBU 3 jederzeit von der Zentrale 4 aus zu unterbinden, beispielsweise durch eine entsprechende Abbruchnachricht, welche die Zentrale 4 über das Mobilfunknetz an die OBU 3 sendet, woraufhin diese den Schleifenprozess 33 abbricht (Pfeil 33').

Die im Deliktserver 7 und einem beispielhaften Kontrollfahrzeug 6 ablaufenden Schritte werden anhand der Fig. 3 und 7a erläutert. Die Fig. 3a und 3b zeigen die Situation bei der Passage eines Kontrollfahrzeugs 6 an einem Fahrzeug 2 zu zwei aufeinanderfolgenden Zeitpunkten. In Vorbereitung (oder während) einer solchen Kontrolle können den Kontrollfahrzeugen 6 vom Deliktserver 7 selektiv jene Deliktnachrichten 39 zur Verfügung gestellt, welche von Delikten aus ihrer jeweiligen Umgebung 9 stammen.

Zu diesem Zweck registriert sich in einer Registrierungsphase 41 jedes Kontrollfahrzeug 6 mit seiner eigenen Position LOC im Deliktserver 7. Die aktuelle Position LOC des Kontrollfahrzeugs 6 kann von diesem beispielsweise in einem Positionsermittlungsschritt 42 autark selbst ermittelt werden, z.B. mit Hilfe eines Satellitennavigationsempfängers, durch Informationen benachbarter Funkbaken od.dgl. Alternativ kann die Position LOC auch vom Benutzer manuell im Schritt 42 in eine Eingabeeinheit des Kontrollfahrzeugs 6 eingegeben werden.

Im anschließenden Registrierungsschritt 43 registriert sich das Kontrollfahrzeug 6 mit seiner Position LOC im Deliktserver 7, welcher für jedes registrierte Kontrollfahrzeug 6 einen eigenen Task 44 eröffnet.

Mit Hilfe des Tasks 44 kann der Deliktserver 7 alle in den Schritten 40 eingelangten und weiter einlangenden Deliktnachrichten 39 ortsspezifisch "filtern" (Phase 45): Der Deliktserver überprüft dabei, ob der Deliktort DO einer Deliktnachricht 39 in die Umgebung 9 um die Position LOC eines Kontrollfahrzeugs 6 fällt und, wenn ja, stellt er diese Deliktnachricht 39 diesem Kontrollfahrzeug 6 zur Verfügung (Schritt 46). Das Kontrollfahrzeug 6 nimmt die ihm auf diese Weise bereitgestellten Deliktnachrichten 39 in eine lokale Deliktnachrichtenliste locDLM 47 auf.

Das Bereitstellen der ortsspezifisch gefilterten Deliktnachrichten 39 im Schritt 46 kann sowohl fortlaufend, z.B. periodisch oder im Anlassfall, erfolgen, beispielsweise indem jede einzelne Deliktnachricht 39 vom Deliktserver 7 an das Kontrollfahrzeug 6 gesandt wird, oder stapelweise (in Batch-Verarbeitung), indem sich das Kontrollfahrzeug 6 jeweils die zu einem bestimmten Zeitpunkt bereitgestellten Deliktnachrichten 39 vom Deliktserver 7 abholt oder von diesem geschickt bekommt.

Die Deliktnachrichten 39 tragen mit ihrer optionalen Deliktzeit DT auch jeweils einen "Zeitstempel", der ihre zeitliche Gültigkeit begrenzen kann: So können "zu alte" Deliktnachrichten 39, d.h. solche, deren Zeitstempel DT außerhalb eines vorgegebenen Zeitraums liegt, automatisch verworfen werden, sowohl im Deliktserver 7 als auch im Kontrollfahrzeug 6, und/oder der Deliktserver 7 kann einem Kontrollfahrzeug 6 auch nur "aktuelle" Deliktnachrichten 39 zur Verfügung stellen, d.h. solche, deren Zeitstempel DT innerhalb eines vorgegebenen Zeitraums liegt.

In der Registrierungsphase 41 "abonnieren" die Kontrollfahrzeuge 6 somit gleichsam Deliktnachrichten 39 aus ihrer Umgebung 9, und dies z.B. solange, bis sie in einem Schritt 48 eine Deregistrierungsanforderung an den Deliktserver 7 senden, woraufhin dieser den Task 44 löscht.

Die Kontrollfahrzeuge 6 sind auf dieser Weise jeweils mit aktuellen und ortsspezifischen Deliktnachrichten 39 aus ihrer Umgebung 9 bestückt und können bei der Passage bzw. Kontrolle eines Fahrzeugs 2 Kontrolltasks 49 ausführen, welche jeweils auf die lokale Deliktnachrichtenliste 47 zugreifen.

In jedem Kontrolltask 49 wird gemäß den Fig. 3 und 7a bei Eintritt eines Deliktfahrzeugs 2' in die DSRC-Reichweite der DSRC-Funkschnittstelle 50 zwischen DSRC-Sendeempfänger 31 der OBU 3 und DSRC-Sendeempfänger 51 des Kontrollfahrzeugs 6 in einem ersten Schritt 52 eine Positionsnachricht 36 der OBU 3 aufgefangen. Anschließend werden im Schritt 53 das Kennzeichen LPN von der Kennzeichentafel 13 des Deliktfahrzeugs 2' mit Hilfe einer Kennzeichenleseeinrichtung 54 des Kontrollfahrzeugs 6 ausgelesen werden (Pfeil 55). Im optionalen Schritt 56 kann die OBU 3 weiter über die DSRC-Funkschnittstelle 50 ausgelesen werden, z.B. deren Mautparameter OC, OBU-Kennung usw. Die Schritte 52, 53 und 56 können auch in anderer Reihenfolge ablaufen. Im optionalen Schritt 57 werden aus der lokalen Deliktnachrichtenliste 47 Deliktnachrichten 39 der Umgebung 9 dahingehend überprüft, ob die Position POS und/oder das Kennzeichen LPN des Deliktfahrzeugs 2' darin auftreten, um das Delikt zu validieren.

Im Falle eines Delikts gibt das Kontrollfahrzeug 6 einen entsprechenden Alarm 58 an seine Besatzung aus. Die Alarmmeldung 58 kann beispielsweise ein optischer oder akustischer Alarm sein oder eine Anzeige auf einem Bildschirm, welche gleichzeitig das gelesene Kennzeichen LPN und die Deliktnachricht DLM 39 anzeigt. Die Besatzung kann dann entsprechende Ahndungsmaßnahmen ergreifen, z.B. das Deliktfahrzeug 2' anhalten, die OBU 3 weiter überprüfen und gegebenenfalls eine entsprechende Nachmaut verrechnen oder Strafe verhängen. Die Alarmmeldung 58 kann zusätzlich automatisch auf einer nach außen sichtbaren Signaleinrichtung 59 des Kontrollfahrzeugs 6 für das Deliktfahrzeug 2' angezeigt werden (Pfeil 60), um dieses z.B. zum Anhalten aufzufordern, beispielsweise mit einer Leuchtschrift "STOP".

Der Deliktserver 7 kann optional mit Schätzungsalgorithmen ausgestattet werden, welche eine Schätzung der zeitlichen Veränderungen der Deliktorte DO (als "letzte Aufenthaltsorte" der Deliktfahrzeuge 2') aufgrund von bei der Deliktmarkierung mit der Einrichtung 18 gemessenen Geschwindigkeiten und Fahrtrichtungen der Fahrzeuge 2 durchführen.

Der Bewegungsvektor v des Fahrzeugs 2 zum Deliktzeitpunkt DT kann in die Deliktnachricht 39 integriert und dem Deliktserver 7 übermittelt werden. Der Deliktserver 7 kann daraufhin für spätere Zeitpunkte mögliche neue Aufenthaltsorte DO des Fahrzeugs 2 extrapolieren bzw. schätzen, auch unterstützt durch Straßennetzpläne des Straßennetzes, und in der Phase 45 für jene Zeitpunkte berücksichtigen, zu denen die Auswahl der für eine Umgebung 9 eines Kontrollfahrzeugs 6 relevanten Deliktnachrichten 39 vorgenommen wird. Dadurch können Deliktnachrichten 39 von Fahrzeugen 2, deren Deliktorte DO früher außerhalb einer Umgebung 9 um die Position LOC eines Kontrollfahrzeugs 6 lagen, zu einem späteren Zeitpunkt - extrapoliert - in die Umgebung 9 fallen und damit diesem Kontrollfahrzeug 6 bzw. dessen lokaler Deliktnachrichtenliste 47 zur Verfügung gestellt werden.

Fig. 7b zeigt eine vereinfachte Ausführungsform des Verfahrens, das in einem Kontrollfahrzeug 6 oder einem Task 49 desselben ablaufen kann. In dieser vereinfachten Variante empfängt das Kontrollfahrzeug 6 im Schritt 52 über die DSRC-Funkschnittstelle 50 zwischen seinem DSRC-Sendeempfänger 51 und dem DSRC-Sendeempfänger 31 der OBU 3 direkt deren Positionsnachricht 36. Aufgrund der begrenzten Reichweite der DSRC-Funkschnittstelle 50 zeigt der erfolgreiche Empfang einer Positionsnachricht 36 gleichzeitig eine enge geographische Nähe zum Deliktfahrzeug 2' an, sodass dieses - soferne die Verkehrsdichte nicht zu hoch ist und dadurch mehrere Deliktfahrzeuge 2' in den Funkabdeckungsbereich der DSRC-Funkschnittstelle 50 gelangen könnten - lokalisiert und aufgefunden ist. Bei Verwendung entsprechender Richtantennen für den DSRC-Sendeempfänger 51 des Kontrollfahrzeugs 6 kann der DSRC-Funkabdeckungsbereich und damit die Aufspür-Umgebung 9 des Kontrollfahrzeugs 6 weiter eingeschränkt werden, so dass durch den Empfang einer Positionsnachricht 36 das Deliktfahrzeug 2' eindeutig lokalisiert und detektiert werden kann.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Vorrichtung zur Kontrolle in einem Straßenmautsystem (1), das auf von Fahrzeugen (2) mitgeführten Onboard-Units (3) basiert, umfassend:
zumindest ein Markierungsfahrzeug (5), zumindest eine On-board-Unit (3) und zumindest eine Kontrolleinrichtung (6) mit jeweils einem DSRC-Sendeempfänger (11, 31, 51) zur Errichtung einer DSRC-Funkschnittstelle (17, 50),
wobei das Markierungsfahrzeug (5) dafür ausgebildet ist, ein Verkehrs- oder Mautdelikt einer Onboard-Unit (3) oder eines diese mitführenden Fahrzeugs (2) zu detektieren und, im Deliktfall, eine Markierungsnachricht (27) an die Onboard-Unit (3) über die DSRC-Funkschnittstelle (17) zu senden,
wobei die Onboard-Unit (3) dafür ausgebildet ist, ihre Position (POS) zu bestimmen und ab Empfang (32) einer Markierungsnachricht (27) periodisch Positionsnachrichten (36) mit jeweils ihrer aktuellen Position (POS) auszusenden, und
wobei die Kontrolleinrichtung (6) dafür ausgebildet ist, anhand zumindest einer der von der Onboard-Unit (3) ausgesandten Positionsnachrichten (36) das Fahrzeug (2) zu detektieren.

2. Vorrichtung nach Anspruch 1, **dadurch gekennzeichnet, dass** das Markierungsfahrzeug (5) dafür ausgebildet ist, zumindest einen Mautparameter (OC) aus der Onboard-Unit (3) über die DSRC-Funkschnittstelle (17) auszulesen, den Mautparameter (OC) auf Korrektheit zu überprüfen und, wenn inkorrekt, die Markierungsnachricht (27) an die Onboard-Unit (3) über die DSRC-Funkschnittstelle (17) zu senden.

3. Vorrichtung nach Anspruch 2, **dadurch gekennzeichnet, dass** der Mautparameter (OC) fahrzeugformspezifisch ist und das Markierungsfahrzeug (5) einen Sensor (14), bevorzugt einen Laserentfernungsmesser oder Laserscanner, zum Erfassen eines Formparameters (CL) eines die Onboard-Unit (3) mitführenden Fahrzeugs (2) aufweist und die Korrektheit des Mautparameters (OC) abhängig vom Formparameter (CL) feststellt.

4. Vorrichtung nach Anspruch 2 oder 3, **dadurch gekennzeichnet, dass** die Kontrolleinrichtung (6) dafür ausgebildet ist, eine Positionsnachricht (36) zu empfangen und, wenn die darin angegebene Position (POS) innerhalb der Reichweite der DSRC-Funkschnittstelle (50) ist, den Mautparameter (OC) aus der Onboard-Unit (3) über die DSRC-Funkschnittstelle (50) auszulesen und anzuzeigen.

5. Vorrichtung nach einem der Ansprüche 1 bis 4, **dadurch gekennzeichnet, dass** die Kontrolleinrichtung (6) ein Kontrollfahrzeug ist.

6. Vorrichtung nach einem der Ansprüche 1 bis 5, **dadurch gekennzeichnet, dass** die Onboard-Unit (3) dafür ausgebildet ist, Positionsnachrichten (39) über ihren DSRC-Sendeempfänger (31) auszusenden, und die Kontrolleinrichtung (6) dafür ausgebildet ist, Positionsnachrichten über ihren DSRC-Sendeempfänger (51) zu empfangen.

7. Vorrichtung nach einem der Ansprüche 1 bis 6, **dadurch gekennzeichnet, dass** das Markierungsfahrzeug (5) dafür ausgebildet ist, beim Senden einer Markierungsnachricht (27) zusätzlich eine Deliktnachricht (39) über ein Mobilfunknetz an eine Zentrale (4) zu senden, und die Kontrolleinrichtung (6) dafür ausgebildet ist, Deliktnachrichten (39) von der Zentrale (4) zu empfangen und ausgelesene Mautparameter (OC) dagegen zu prüfen.

8. Vorrichtung nach Anspruch 7, **dadurch gekennzeichnet, dass** die Kontrolleinrichtung (6) ein Kontrollfahrzeug ist und dieses mit einer Einrichtung zur Bestimmung seiner Position (LOC), bevorzugt einem Satellitennavigationsempfänger, ausgestattet ist und seine Position (LOC) in der Zentrale (4) registriert, um von der Zentrale (4) nur Deliktnachrichten (39) betreffend seine Umgebung (9) zu erhalten.

9. Vorrichtung nach Anspruch 7 oder 8, **dadurch gekennzeichnet, dass** das Markierungsfahrzeug (5) eine Leseeinrichtung (12) für ein Kennzeichen (LPN) eines die Onboard-Unit (3) mitführenden Fahrzeugs (2) aufweist und das Kennzeichen (LPN) in die Deliktnachricht (39) aufnimmt, und die Kontrolleinrichtung (6) ebenfalls eine Leseeinrichtung (54) für das Fahrzeugkennzeichen (LPN) aufweist und dieses zum Auswählen der Deliktnachricht (39) für die Gegenprüfung verwendet.

10. Vorrichtung nach einem der Ansprüche 1 bis 9, **dadurch gekennzeichnet, dass** das Markierungsfahrzeug (5) mit einer Einrichtung (18) zur Messung von Geschwindigkeit und Fahrtrichtung eines passierenden Fahrzeugs (2) ausgestattet ist und diese Messwerte (v) in die Markierungsnachricht (27) und/oder die Deliktnachricht (39) aufnimmt.

11. Verfahren zur Kontrolle in einem Straßenmautsystem (1), das auf von Fahrzeugen (2) mitgeführten Onboard-Units (3) basiert, unter Verwendung zumindest eines Markierungsfahrzeugs (5), zumindest einer Onboard-Unit (3) und zumindest einer Kontrolleinrichtung (6) mit jeweils einem DSRC-Sendeempfänger (11, 31, 51) zur Errichtung einer DSRC-Funkschnittstelle (17, 50), umfassend:
im Markierungsfahrzeug (5): Detektieren (19-24; 38) eines Verkehrs- oder Mautdelikts einer Onboard-Unit (3) oder eines diese mitführenden Fahrzeugs (2) und, im Deliktfall, Senden (25) einer Markierungsnachricht (27) an die Onboard-Unit (3) über die DSRC-Funkschnittstelle (17);
in der Onboard-Unit (3): ab Empfang (32) einer Markierungsnachricht (27), periodisches Bestimmen (34) ihrer eigenen Position (POS) und Aussenden von Positionsnachrichten (36) mit jeweils ihrer aktuellen Position (POS);
in der Kontrolleinrichtung (6): Detektieren (52) des Fahrzeugs (2) anhand zumindest einer der von der Onboard-Unit (3) ausgesandten Positionsnachrichten (36).

12. Verfahren nach Anspruch 11, **dadurch gekennzeichnet, dass** das periodische Aussenden der Positionsnachrichten (36) in der Onboard-Unit (3) nur über eine begrenzte Zeitspanne oder für eine begrenzte Anzahl von Positionsnachrichten (36) erfolgt.

13. Verfahren nach Anspruch 11 oder 12, **dadurch gekennzeichnet, dass** das Detektieren (19-24; 38) im Markierungsfahrzeug (5) durch Auslesen (22) zumindest eines Mautparameters (OC) aus der Onboard-Unit (3) über die DSRC-Funkschnittstelle (17) und Überprüfen (24) des Mautparameters (OC) auf Korrektheit erfolgt.

14. Verfahren nach Anspruch 13, **dadurch gekennzeichnet, dass** der Mautparameter (OC) fahrzeugformspezifisch ist, bevorzugt die Fahrzeuglänge oder -achsanzahl, und vom Markierungsfahrzeug (5) ein Formparameter (CL) eines die Onboard-Unit (3) mitführenden Fahrzeugs (2) erfasst und die Korrektheit des Mautparameters (OC) abhängig vom Formparameter (CL) festgestellt wird.

15. Verfahren nach Anspruch 13 oder 14, **dadurch gekennzeichnet, dass** das Detektieren (52) in der Kontrolleinrichtung (6) durch Empfangen (52) einer Positionsnachricht (36) und, wenn die darin angegebene Position (POS) innerhalb der Reichweite der DSRC-Funkschnittstelle (50) ist, Auslesen des Mautparameters (OC) aus der Onboard-Unit (3) über die DSRC-Funkschnittstelle (50) und Anzeigen desselben erfolgt.

16. Verfahren nach einem der Ansprüche 11 bis 15, **dadurch gekennzeichnet, dass** die Positionsnachrichten (36) über die DSRC-Funkschnittstelle (50) ausgesendet und von der Kontrolleinrichtung (6) empfangen werden.

17. Verfahren nach einem der Ansprüche 11 bis 15, **dadurch gekennzeichnet, dass** die Positionsnachrichten (36) von der On-board-Unit (3) über ein Mobilfunknetz und eine Zentrale (4) an die Kontrolleinrichtung (6) ausgesendet werden.

18. Verfahren nach einem der Ansprüche 11 bis 17, **dadurch gekennzeichnet, dass** vom Markierungsfahrzeug (5) beim Senden (25) einer Markierungsnachricht (27) zusätzlich eine Deliktnachricht (39) über ein Mobilfunknetz an eine Zentrale (4) gesendet wird.

19. Verfahren nach den Ansprüchen 15 und 18, **dadurch gekennzeichnet, dass** von der Kontrolleinrichtung (6) Deliktnachrichten (39) von der Zentrale (4) empfangen und ausgelesene Mautparameter (OC) dagegen geprüft werden.

20. Verfahren nach Anspruch 18 oder 19, **dadurch gekennzeichnet, dass** die Zentrale zu einer empfangenen Deliktnachricht (39) eine Bestätigungsnachricht (27') über das Mobilfunknetz an die in der Deliktnachricht (39) genannte Onboard-Unit (3) sendet, und dass die Onboard-Unit (3) vor dem Aussenden der Positionsnachrichten (36) auf eine solche Bestätigungsnachricht (27') wartet.

21. Verfahren nach Anspruch 20, **dadurch gekennzeichnet, dass** die Onboard-Unit (3), wenn innerhalb einer vorgegebenen Wartezeit keine Bestätigungsnachricht (27') einlangt, die empfangene Markierungsnachricht (27) ignoriert (27").

22. Verfahren nach einem der Ansprüche 18 bis 21, **dadurch gekennzeichnet, dass** das Aussenden der Positionsnachrichten (36) in der Onboard-Unit (3) von der Zentrale (4) aus über das Mobilfunknetz abschaltbar (33') ist.

23. Verfahren nach einem der Ansprüche 11 bis 22, **dadurch gekennzeichnet, dass** vom Markierungsfahrzeug (5) ein Kennzeichen (LPN) eines die Onboard-Unit (3) mitführenden Fahrzeugs (2) gelesen und in die Deliktnachricht (39) aufgenommen wird, und von der Kontrolleinrichtung (6) ebenfalls das Fahrzeugkennzeichen (LPN) gelesen und zum Auswählen der Deliktnachricht (39) für die Gegenprüfung (57) verwendet wird.

## Claims

1. A control device for a road toll system (1) which is based on on-board units (3) carried by vehicles (2), comprising:
at least one marking vehicle (5), at least one on-board unit (3), and at least one control unit (6), each comprising a DSRC transceiver (11, 31, 51) for establishing a DSRC radio interface (17, 50),
wherein the marking vehicle (5) is configured to detect a traffic or toll violation of an on-board unit (3), or of a vehicle (2) carrying the same, and, if a violation exists, to transmit a marker (27) to the on-board unit (3) via the DSRC radio interface (17),
wherein the on-board unit (3) is configured to determine the position (POS) thereof and, upon receipt (32) of a marker (27), to periodically broadcast position messages (36) containing the respective current position (POS) thereof, and
wherein the control unit (6) is configured to detect the vehicle (2) based on at least one of the position messages (36) broadcast by the on-board unit (3).

2. The device according to claim 1, **characterized in that** the marking vehicle (5) is configured to read out at least one toll parameter (OC) from the on-board unit (3) via the DSRC radio interface (17), check the toll parameter (OC) for accuracy and, if it is incorrect, to transmit the marker (27) to the on-board unit (3) via the DSRC radio interface (17).

3. The device according to claim 2, **characterized in that** the toll parameter (OC) is vehicle shape-specific, and the marking vehicle (5) comprises a sensor (14), preferably a laser rangefinder or laser scanner, for detecting a shape parameter (CL) of a vehicle (2) carrying the on-board unit (3) and ascertains the accuracy of the toll parameter (OC) depending on the shape parameter (CL).

4. The device according to claim 2 or 3, **characterized in that** the control unit (6) is configured to receive a position message (36) and, if the position (POS) indicated therein is within the range of the DSRC radio interface (50), to read out the toll parameter (OC) from the on-board unit (3) via the DSRC radio interface (50) and display it.

5. The device according to any one of claims 1 to 4, **characterized in that** the control unit (6) is a control vehicle.

6. The device according to any one of claims 1 to 5, **characterized in that** the on-board unit (3) is configured to broadcast position messages (39) via the DSRC transceiver (31) thereof, and the control unit (6) is configured to receive position messages via the DSRC transceiver (51) thereof.

7. The device according to any one of claims 1 to 6, **characterized in that** the marking vehicle (5) is configured to additionally transmit a violation message (39) via a mobile communication network to a back office (4) when transmitting a marker (27), and the control unit (6) is configured to receive violation messages (39) from the back office (4) and counter-check read-out toll parameters (OC) against them.

8. The device according to claim 7, **characterized in that** the control unit (6) is a control vehicle and the vehicle is equipped with a unit for determining the position (LOC) thereof, preferably a satellite navigation receiver, and registers the position (LOC) thereof with the back office (4) so as to receive only violation messages (39) that relate to the surroundings (9) of the vehicle from the back office (4).

9. The device according to claim 7 or 8, **characterized in that** the marking vehicle (5) comprises a read unit (12) for a license plate number (LPN) of a vehicle (2) carrying the on-board unit (3) and adds the license plate number (LPN) to the violation message (39), and the control unit (6) likewise comprises a read unit (54) for the vehicle license plate number (LPN) and uses this number for selecting the violation message (39) for the cross-check.

10. The device according to any one of claims 1 to 9, **characterized in that** the marking vehicle (5) is equipped with a unit (18) for measuring the speed and driving direction of a passing vehicle (2) and adds these measured values (v) to the marker (27) and/or the violation message (39).

11. A control method for a road toll system (1) which is based on on-board units (3) carried by vehicles (2), using at least one marking vehicle (5), at least one on-board unit (3), and at least one control unit (6), each comprising a DSRC transceiver (11, 31, 51) for establishing a DSRC radio interface (17, 50), comprising the following steps:
in the marking vehicle (5): detecting (19 to 24; 38) a traffic or toll violation of an on-board unit (3), or of a vehicle (2) carrying the same, and, if a violation exists, transmitting (25) a marker (27) to the on-board unit (3) via the DSRC radio interface (17);
in the on-board unit (3): periodically determining (34), upon receipt (32) of a marker (27), the own position (POS) of the unit and broadcasting position messages (36) containing the respective current position (POS) thereof;
in the control unit (6): detecting (52) the vehicle (2) based on at least one of the position messages (36) that are broadcast by the on-board unit (3).

12. The method according to claim 11, **characterized in that** the periodic broadcasting of the position messages (36) in the on-board unit (3) takes place only over a limited period of time or only for a limited number of position messages (36).

13. The method according to claim 11 or 12, **characterized in that** the detection (19 to 24; 38) in the marking vehicle (5) is carried out by reading out (22) at least one toll parameter (OC) from the on-board unit (3) via the DSRC radio interface (17) and checking (24) the toll parameter (OC) for accuracy.

14. The method according to claim 13, **characterized in that** the toll parameter (OC) is vehicle shape-specific, preferably the vehicle length or number of axles, and the marking vehicle (5) detects a shape parameter (CL) of a vehicle (2) carrying the on-board unit (3) and ascertains the accuracy of the toll parameter (OC) depending on the shape parameter (CL).

15. The method according to claim 13 or 14, **characterized in that** the detection (52) in the control unit (6) takes place by receiving (52) a position message (36), and, if the position (POS) indicated therein is located within the range of the DSRC radio interface (50), reading out the toll parameter (OC) from the on-board unit (3) via the DSRC radio interface (50) and displaying the same.

16. A method according to any one of claims 11 to 15, **characterized in that** the position messages (36) are broadcast via the DSRC radio interface (50) and received by the control unit (6).

17. The method according to any one of claims 11 to 15, **characterized in that** the position messages (36) are broadcast by the on-board unit (3) to the control unit (6) via a mobile communication network and a back office (4).

18. The method according to any one of claims 11 to 17, **characterized in that** the marking vehicle (5) additionally transmits a violation message (39) to a back office (4) via a mobile communication network when transmitting (25) a marker (27).

19. The method according to claims 15 and 18, **characterized in that** the control unit (6) receives violation messages (39) from the back office (4) and cross-checks read-out toll parameters (OC) against them.

20. The method according to claim 18 or 19, **characterized in that** the back office transmits a confirmation message (27') for a received violation message (39) to the on-board unit (3) mentioned in the violation message (39) via the mobile communication network, and the on-board unit (3) awaits such a confirmation message (27') before broadcasting the position messages (36).

21. The method according to claim 20, **characterized in that** the received marker (27) is ignored (27") by the on-board unit (3) if no confirmation message (27') arrives within a predetermined waiting period.

22. The method according to any one of claims 18 to 21, **characterized in that** the broadcasting of the position messages (36) can be deactivated (33') in the on-board unit (3) from the back office (4) via the mobile communication network.

23. The method according to any one of claims 11 to 22, **characterized in that** the marking vehicle (5) reads a license plate number (LPN) of a vehicle (2) carrying the on-board unit (3) and adds it to the violation message (39), and the control unit (6) likewise reads the vehicle license plate number (LPN) and uses it to select the violation message (39) for the cross-check (57).

## Revendications

1. Dispositif pour le contrôle dans un système de péage routier (1) basé sur des unités de bord (3) embarquées par des véhicules (2), comprenant :
au moins un véhicule de marquage (5), au moins une unité embarquée (3) et au moins un dispositif de contrôle (6) respectivement pourvus d'un émetteur-récepteur DSRC (11, 31, 51), pour l'établissement d'une interface radio DSRC (17, 50),
dans lequel le véhicule de marquage (5) est conçu pour détecter un délit routier ou un délit de péage d'une unité embarquée (3) ou d'un véhicule (2) transportant celle-ci, et pour envoyer un message de marquage (27) à l'unité embarquée (3) par le biais de l'interface radio DSRC (17) en cas de délit,
dans lequel l'unité embarquée (3) est conçue pour déterminer sa position (POS) et pour émettre périodiquement des messages de position (36) avec sa position actuelle (POS) respective, à partir de la réception (32) d'un message de marquage (27), et
dans lequel le dispositif de contrôle (6) est conçu pour détecter le véhicule (2) à l'aide d'au moins l'un des messages de position (36) émis par l'unité embarquée (3).

2. Dispositif selon la revendication 1, **caractérisé en ce que** le véhicule de marquage (5) est conçu pour lire au moins un paramètre de péage (OC) à partir de l'unité embarquée (3) par le biais de l'interface radio DSRC (17), pour vérifier le paramètre de péage (OC) quant à son exactitude et, si celui-ci est incorrect, pour envoyer le message de marquage (27) à l'unité embarquée (3) par le biais de l'interface radio DSRC (17).

3. Dispositif selon la revendication 2, **caractérisé en ce que** le paramètre de péage (OC) est spécifique à la forme du véhicule et **en ce que** le véhicule de marquage (5) comporte un capteur (14), de préférence un télémètre laser ou un scanner laser, pour la détection d'un paramètre de forme (CL) d'un véhicule (2) transportant l'unité embarquée (3), et constate l'exactitude du paramètre de péage (OC) en fonction du paramètre de forme (CL).

4. Dispositif selon la revendication 2 ou 3, **caractérisé en ce que** le dispositif de contrôle (6) est conçu pour recevoir un message de position (36) et, lorsque la position (POS) indiquée dans celui-ci est comprise dans la portée de l'interface radio DSRC (50), pour lire et indiquer le paramètre de péage (OC) à partir de l'unité embarquée (3) par le biais de l'interface radio DSRC (50).

5. Dispositif selon l'une des revendications 1 à 4, **caractérisé en ce que** le dispositif de contrôle (6) est un véhicule de contrôle.

6. Dispositif selon l'une des revendications 1 à 5, **caractérisé en ce que** l'unité embarquée (3) est conçue pour émettre des messages de position (39) par le biais de son émetteur-récepteur DSRC (31), et **en ce que** le dispositif de contrôle (6) est conçu pour recevoir des messages de position par le biais de son émetteur-récepteur DSRC (51).

7. Dispositif selon l'une des revendications 1 à 6, **caractérisé en ce que** le véhicule de marquage (5) est conçu pour émettre également un message de délit (39) par le biais d'un réseau de communication mobile à une centrale (4) lors de l'envoi d'un message de marquage (27), et **en ce que** le dispositif de contrôle (6) est conçu pour recevoir des messages de délit (39) de la part de la centrale (4) et pour vérifier des paramètres de péage (OC) lus en conséquence.

8. Dispositif selon la revendication 7, **caractérisé en ce que** le dispositif de contrôle (6) est un véhicule de contrôle et **en ce que** celui-ci est équipé d'un dispositif pour la détermination de sa position (LOC), de préférence d'un récepteur de navigation par satellite, et enregistre sa position (LOC) dans la centrale (4), afin d'obtenir uniquement des messages de délit (39) concernant son environnement (9) de la part de la centrale (4).

9. Dispositif selon la revendication 7 ou 8, **caractérisé en ce que** le véhicule de marquage (5) comporte un dispositif de lecture (12) pour un identifiant (LPN) d'un véhicule (2) transportant l'unité embarquée (3), et intègre l'identifiant (LPN) dans le message de délit (39), et **en ce que** le dispositif de contrôle (6) comporte également un dispositif de lecture (54) pour l'identifiant (LPN) du véhicule et utilise celui-ci pour la sélection du messages de délit (39) pour la vérification.

10. Dispositif selon l'une des revendications 1 à 9, **caractérisé en ce que** le véhicule de marquage (5) est équipé d'un dispositif (18) pour la mesure de la vitesse et de la direction de circulation d'un véhicule (2) passant devant, et intègre ces valeurs de mesure (v) dans le message de marquage (27) et/ou dans le messages de délit (39).

11. Procédé pour le contrôle dans un système de péage routier (1) basé sur des unités de bord (3) embarquées par des véhicules (2), utilisant au moins un véhicule de marquage (5), au moins une unité embarquée (3) et au moins un dispositif de contrôle (6) respectivement pourvus d'un émetteur-récepteur DSRC (11, 31, 51) pour l'établissement d'une interface radio DSRC (17, 50), comprenant :
dans le véhicule de marquage (5) : la détection (19-24 ; 38) d'un délit routier ou d'un délit de péage d'une unité embarquée (3) ou d'un véhicule (2) transportant celle-ci, et l'envoi (25) d'un message de marquage (27) à l'unité embarquée (3) par le biais de l'interface radio DSRC (17) en cas de délit ;
dans l'unité embarquée (3) : à partir de la réception (32) d'un message de marquage (27), la détermination périodique (34) de sa propre position (POS) et l'émission de messages de position (36) avec sa position actuelle (POS) respective ;
dans le dispositif de contrôle (6) : la détection (52) du véhicule (2) à l'aide d'au moins l'un des messages de position (36) émis par l'unité embarquée (3).

12. Procédé selon la revendication 11, **caractérisé en ce que** l'émission périodique des messages de position (36) dans l'unité embarquée (3) est effectuée uniquement sur une durée limitée ou pour un nombre limité de messages de position (36).

13. Procédé selon la revendication 11 ou 12, **caractérisé en ce que** la détection (19-24 ; 38) dans le véhicule de marquage (5) est effectuée par la lecture (22) d'au moins un paramètre de péage (OC) à partir de l'unité embarquée (3), par le biais de l'interface radio DSRC (17), et par la vérification (24) du paramètre de péage (OC) quant à son exactitude.

14. Procédé selon la revendication 13, **caractérisé en ce que** le paramètre de péage (OC) est spécifique à la forme du véhicule, de préférence à la longueur ou au nombre d'axes du véhicule, et **en ce qu'**un paramètre de forme (CL) d'un véhicule (2) transportant l'unité embarquée (3) est détecté par le véhicule de marquage (5), et l'exactitude du paramètre de péage (OC) est déterminée en fonction du paramètre de forme (CL).

15. Procédé selon la revendication 13 ou 14, **caractérisé en ce que** la détection (52) dans le dispositif de contrôle (6) est effectuée par la réception (52) d'un message de position (36) et, lorsque la position (POS) indiquée dans celui-ci est comprise dans la portée de l'interface radio DSRC (50), par la lecture du paramètre de péage (OC) à partir de l'unité embarquée (3) par le biais de l'interface radio DSRC (50) et par l'affichage de celui-ci.

16. Procédé selon l'une des revendications 11 à 15, **caractérisé en ce que** les messages de position (36) sont émis par le biais de l'interface radio DSRC (50) et reçus par le dispositif de contrôle (6).

17. Procédé selon l'une des revendications 11 à 15, **caractérisé en ce que** les messages de position (36) sont envoyés au dispositif de contrôle (6) par l'unité embarquée (3) par le biais d'un réseau de communication mobile et d'une centrale (4).

18. Procédé selon l'une des revendications 11 à 17, **caractérisé en ce que** le véhicule de marquage (5) envoie également un message de délit (39) à une centrale (4) par le biais d'un réseau de communication mobile lors de l'envoi (25) d'un message de marquage (27).

19. Procédé selon l'une des revendications 15 et 18, **caractérisé en ce que** des messages de délit (39) venant de la centrale (4) sont reçus par le dispositif de contrôle (6) et des paramètres de péage (OC) lus sont vérifiés en conséquence.

20. Procédé selon la revendication 18 ou 19, **caractérisé en ce que** la centrale envoie un message de confirmation (27') pour un message de délit (39) reçu, par le biais du réseau de communication mobile, à l'unité embarquée (3) mentionnée dans le message de délit (39), et **en ce que** l'unité embarquée (3) attend un tel message de confirmation (27') avant d'envoyer les messages de position (36).

21. Procédé selon la revendication 20, **caractérisé en ce que** l'unité embarquée (3) ignore (27") le message de marquage (27) reçu, lorsqu'aucun message de confirmation (27') n'est reçu en l'espace d'un temps d'attente prédéfini.

22. Procédé selon l'une des revendications 18 à 21, **caractérisé en ce que** l'émission des messages de position (36) dans l'unité embarquée (3) peut être désactivée (33') à partir de la centrale (4), par le biais du réseau de communication mobile.

23. Procédé selon l'une des revendications 11 à 22, **caractérisé en ce qu'**un identifiant (LPN) d'un véhicule (2) transportant l'unité embarquée (3) est lu par le véhicule de marquage (5) et intégré dans le message de délit (39), et **en ce que** l'identifiant de véhicule (LPN) est également lu par le dispositif de contrôle (6) et utilisé pour la sélection du message de délit (39) pour la vérification (57).
